# EUROPÄISCHE PATENTSCHRIFT

(11) **EP 2 853 728 B1**
(45) Veröffentlichungstag und Bekanntmachung des Hinweises auf die Patenterteilung: **23.09.2015**
(21) Anmeldenummer: 13004713.7
(22) Anmeldetag: 28.09.2013
(51) Int. Cl.: F03B 13/06

(54) **Verfahren zur Speicherung von elektrischer Energie in einem natürlichen Speicher**
Method for storing electrical energy in a natural storage system
Procédé de stockage d'énergie électrique dans un accumulateur naturel

(43) Veröffentlichungstag der Anmeldung: 01.04.2015
(73) Patentinhaber: Olbert, Gerhard, 69221 Dossenheim (DE)
(72) Erfinder: Olbert, Gerhard, 69221 Dossenheim (DE); Torsten, Mattke, 67251 Freinsheim (DE); Gerlinger, Wolfgang, 67117 Limburgerhof (DE); Kem, Christian, 70563 Stuttgart (DE)

(56) Entgegenhaltungen:
- CH-A- 331 770
- US-A- 3 431 735
- REFEREX, 31. Dezember 2004 (2004-12-31), XP040425244,
- OLEFS M ET AL: "Textile protection of snow and ice: Measured and simulated effects on the energy and mass balance", COLD REGIONS SCIENCE AND TECHNOLOGY, ELSEVIER, AMSTERDAM, NL, Bd. 62, Nr. 2-3, 1. Juli 2010 (2010-07-01) , Seiten 126-141, XP027053509, ISSN: 0165-232X [gefunden am 2010-04-08]
- Kraftwerke Linth-Limmern Ag: "Zukunft Wasserkraft - Linthal 2015", , 30 April 2013 (2013-04-30), XP055137793, Retrieved from the Internet: URL:http://www.axpo.com/content/dam/axpo/s witzerland/erleben/dokumente/130429_Axpo_Z ukunft_Wasserkraft_5Aufl.pdf [retrieved on 2014-09-02]

## Beschreibung

Die Erfindung betrifft ein Verfahren zur Speicherung von elektrischer Energie in einem natürlichen Speicher.

Der Anteil an Strom aus erneuerbaren Energiequellen, insbesondere aus Wind- und Sonnenenergie, wird zunehmend größer. Problematisch ist dabei jedoch, dass die Stromerzeugung nicht kontinuierlich läuft, sondern entsprechend den aktuellen Wetterverhältnissen. Es ist daher erforderlich, Speicher insbesondere für die fluktuierend anfallenden Stromspitzen aus erneuerbaren Energiequellen zur Verfügung zu stellen. Diese müssen eine ausreichende Kapazität aufweisen und einfach in die bestehende Infrastruktur integrierbar sein.

Vom Zentrum für Sonnenenergie und Wasserstoff-Forschung Baden-Württemberg (ZSW) in Kooperation mit dem Fraunhofer Institut für Windenergie und Energiesystemtechnik (IWES) wurde bereits ein Verfahren entwickelt, um fluktuierend anfallenden Ökostrom in Form von synthetischem Erdgas zu speichern. Dabei wird der überschüssige erneuerbare Strom genutzt, um Wasser elektrolytisch in Wasserstoff und Sauerstoff zu spalten. Durch chemische Reaktion des Wasserstoffs mit Kohlenstoffdioxid entsteht Methan. Dieses wird wie herkömmliches Erdgas in das bestehende Erdgasnetz eingespeist, um dann Erdgasautos anzutreiben oder Erdgasheizungen anzufeuern.

Das obige Verfahren hat jedoch insbesondere den Nachteil, dass es die Nutzung der Stromspitzen auf eine Verwertung in Form von Erdgas begrenzt.

Auch aus Erdgas kann wieder Strom gewonnen werden, allerdings ist die An- und Abfahrdauer größer als bei Wasserkraftwerken, und Erdgas ist nur beschränkt geeignet zur Speicherung von Spitzenlasten. Darüber hinaus ist der Wirkungsgrad kleiner als bei Pumpspeicherkraftwerken.

Konventionelle Kraftwerke, insbesondere thermische Großkraftwerke, sind nur aufwendig regelbar, sie sollten möglichst mit gleichförmiger Last betrieben werden. Da die üblichen Abnehmer jedoch keinen konstanten Bedarf haben, besteht das Problem, den fluktuierend anfallenden Überschussstrom möglichst effizient zu speichern.

Die DE 29 48 062 beschreibt ein Windkraftwerk mit einer Vorrichtung zur Umwandlung der erzeugten Drehenergie in speicherbare bzw. transportierbare Energie. Die Windenergie soll zum Betreiben von Pumpen genutzt werden, um Wasser in ein höher gelegenes Speicherbecken zu befördern.

Die CH 435 126 beschreibt ein Verfahren zur Herstellung einer verbesserten Schmelzwasserkraftwerksanlage für die Erzeugung von elektrischer Energie durch Nutzung der potentiellen Energie des Schmelzwassers, wobei durch ein spezielles Schmelzwasserkanalsystem eine verbesserte Nutzung des auch in Wärmeperioden anfallenden Schmelzwassers ermöglicht wird.

In REFEREX XP040425244 werden Pumpspeicherwerke, wie sie üblicher Weise eingesetzt werden, um Wasser in ein höher gelegenes Reservoir zu pumpen, beschrieben, das ein See oder ein Ozean sein kann, d.h. ein stehendes Gewässer.

Es war demgegenüber Aufgabe der vorliegenden Erfindung, ein verbessertes Verfahren für die Nutzung von Stromspitzen aus erneuerbaren Energien zur Verfügung zu stellen. Hierfür sollen insbesondere natürliche Energiespeicher sowie bestehende Infrastrukturen genutzt werden. Die Verwendung des gespeicherten Stromes soll keinen Einschränkungen unterliegen.

Diese Aufgabe wird gelöst durch ein Verfahren zur Speicherung von elektrischer Energie in einem natürlichen Speicher, wobei
1. die elektrische Energie eingesetzt wird, um Wasser aus einem Speicherbecken eines Wasserkraftwerks oder Pumpspeicherwerks auf einen höher gelegenen natürlichen Speicher zu pumpen, der auf einer Höhe liegt, in der
2. eine Oberflächentemperatur des natürlichen Speichers vorliegt, bei der das Wasser zu einer Eisschicht gefriert, wobei die elektrische Energie in Form von potentieller Energie der Eisschicht gespeichert wird und wobei
3. zu einem späteren Zeitpunkt unter geeigneten Umgebungsbedingungen die Eisschicht teilweise oder vollständig schmilzt, wobei Wasser entsteht, das
4. zurück in ein Speicherbecken fließt, und wobei
5. das Wasser aus dem Speicherbecken bei Bedarf über eine oder mehrere Turbinen eines Wasserkraftwerks oder Pumpspeicherwerks geleitet wird, wobei die potentielle Energie in elektrische Energie umgewandelt wird,
dadurch gekennzeichnet, dass die Regelung der Wasserverteilung über einen oder mehrere Verteiler erfolgt, die einzeln mittels Schiebern zu- beziehungsweise abstellbar sind, und wobei die Schieber bevorzugt mit einer Regeleinheit verbunden sind, die dieselben in Abhängigkeit von einem Signal steuert, womit Sensoren, die in der Eisschicht angeordnet sind, den Grad der Durchfrierung derselben registrieren und/oder dass die Verteilung des Wassers mit Hilfe von berührungsfreier Technologie, insbesondere der Satellitentechnologie, Infrarottechnologie und Videoüberwachung gesteuert und geregelt wird.

Bevorzugt wird die elektrische Energie zusätzlich eingesetzt, um Wasser aus einem Vorlagebecken in ein höher gelegenes Vorlagebecken zu pumpen.

Weiter bevorzugt wird die elektrische Energie zusätzlich oder alternativ eingesetzt, um Wasser aus einem Vorlagebecken in ein höher gelegenes Speicherbecken zu pumpen. Darüber hinaus kann die elektrische Energie zusätzlich oder alternativ eingesetzt werden, um Wasser aus einem Vorlagebecken auf einen höher gelegenen natürlichen Speicher zu pumpen.

Es ist auch möglich, die elektrische Energie zusätzlich oder alternativ einzusetzen, um Wasser aus einem stehenden oder fließenden natürlichen Gewässer in ein höher gelegenes Vorlagebecken, in ein höher gelegenes Speicherbecken oder auf einen höher gelegenen natürlichen Speicher zu pumpen.

Aus Gründen einer besseren Lesbarkeit werden vorliegend die Begriffe natürlicher Speicher, Speicherbecken, Vorlagebecken, Wasserkraftwerk und Pumpspeicherwerk jeweils in der Einzahl aufgeführt; der Gegenstand der Erfindung umfasst jedoch nicht nur jeweils ein einzelnes, sondern ebenso auch jeweils zwei oder mehrere der obigen Merkmale.

Als natürliche Energiespeicher bieten sich insbesondere Gletscherfelder, Gletscherbetten abgetauter Gletscher, Geröllfelder, Hochtäler, Nordhänge, Wälder, Wiesen und Hochmoore an.

Das vorgeschlagene Verfahren lässt vorhandene Gletscherflächen quasi anwachsen und erweitert die Kapazitäten vorhandener Wasser- und/oder Pumpspeicherkraftwerke.

Als natürliche Energiespeicher nutzbare Geröllfelder sind Steinhaufenwerke mit einem Lückengrad von insbesondere 15 bis 60%, bevorzugt von 20 bis 45 %. Das Wasser füllt die Hohlräume zwischen den Steinen aus und gefriert bei entsprechenden Umgebungstemperaturen zu Eis.

Wenn sich die Umgebungstemperatur erhöht, schmilzt das gebildete Eis wieder ab, und fließt durch Leitungen und/oder als Oberflächenwasser, zum Beispiel in Bachbetten, wieder zurück.

Das Abschmelzen kann durch geeignete Abdeckungen, insbesondere verstellbare Lamellen oder Folien, die mit licht- bzw. wärmereflektierenden bzw. licht- bzw. wärmeabsorbierenden Materialien beschichtet sein können, gesteuert werden. In das Eis können bevorzugt jahreszeitenabhängig Zusatzstoffe mit eingebracht werden, die das Abschmelzen verzögern oder verhindern, bevorzugt natürliche Stoffe, die die Umwelt nicht belasten, beispielsweise natürliche Sande oder auch feiner Staub.

Vorteilhaft kann hierzu eine Folie eingesetzt werden, die auf der einen Seite eine Wärme und Licht reflektierende Beschichtung und auf der gegenüberliegenden Seite eine Wärme und Licht absorbierende Beschichtung aufweist. Diese Folie kann dann je nach Bedarf mit der entsprechenden Seite nach oben zur Abdeckung der Eisschicht genutzt werden.

Bevorzugt können auch Folien eingesetzt werden, deren Farbe durch Bestrahlung mit Licht in Abhängigkeit von der Wellenlänge derselben gesteuert werden kann.

Vorteilhaft kann eine Folie eingesetzt werden, die durch Anlegen einer Spannung ihre Reflexionseigenschaften ändert, insbesondere von einer hellen und Wärme und Licht reflektierenden Farbe, zu einer dunklen, Wärme und Licht absorbierenden Farbe.

In einer weiteren bevorzugten Ausführungsform kann eine Abdeckung in Form von Lamellen vorgesehen sein, über die, durch unterschiedliche Stellung derselben, der Lichteinfall gesteuert werden kann. Die Lamellen können eine unterschiedliche Farbe auf den beiden Seiten derselben aufweisen, beispielsweise eine helle, insbesondere weiße, und eine dunkle, insbesondere schwarze, Farbe. Durch Querstellen der Lamellen kann weiteres Wasser auf das gebildete Eis aufgebracht werden.

Sofern Folien vorgesehen sind, ist es vorteilhaft, diese in den Wintermonaten nicht aufzubringen, sodass weiteres Wasser auf die Oberfläche des gebildeten Eises, beispielsweise durch Besprühen, aufgebracht werden kann. Im Frühjahr wird dann die Folie über das gesamte gebildete Eis gezogen.
Vorteilhaft können auch verrottbare Folien eingesetzt werden, die nicht wieder abgezogen werden müssen.

Vorteilhaft kann das Wasser über Düsen verteilt werden, die beweglich auf einer Konstruktion, insbesondere einer Hängekonstruktion, angebracht sein können, so dass sie über den natürlichen Speicher gefahren werden können.

Vorteilhaft können bereits vorhandene Standard-Beschneiungsanlagen, wie sie in Skigebieten eingesetzt werden, verwendet werden: Diese sind in den entsprechenden Regionen bereits etabliert und stellen keinen weiteren Eingriff in die natürliche Umgebung dar.

Eisschichten im Sinne der Erfindung sind sowohl kompakte Eisschichten als auch mit Steine bzw. Geröll oder andere Zusatzstoffe versehene Schichten oder auch lose oder zusammengedrückte poröse Schichten von Eispartikeln, Eis- oder Schneeflocken.

Das Hochpumpen des Wassers kann mit festen oder mobilen Einrichtungen durchgeführt werden. Die Verteilung des Wassers kann so gesteuert werden, dass nur eine solche Menge lokal hochgepumpt wird, die unter den aktuellen Wetterbedingungen, d.h in der Regel bei etwa 0°C oder darunter auch gefrieren kann.

In einer bevorzugten Ausführungsform erfolgt die Umwandlung von potenzieller in elektrische Energie mit Hilfe der bereits in der Infrastruktur vorhandenen Wasser- bzw. Pumpspeicherkraftwerke.

In einer weiteren bevorzugten Ausführungsform erfolgt die Umwandlung der zusätzlichen potenziellen Energie aufgrund des höhergelegenen Niveaus des natürlichen Speichers durch ein weiteres Wasser- bzw. Pumpspeicherkraftwerk oberhalb des Niveaus des Speicherbeckens eines vorhandenen Wasser- bzw. Pumpspeicherkraftwerks.

Bevorzugt stammt die elektrische Energie aus Überschusskapazitäten von erneuerbaren Energiequellen oder von konventionellen Kraftwerken, insbesondere thermischen Großkraftwerken, die bevorzugt mit konstanter Last betrieben werden.

Der Strom aus erneuerbaren Energiequellen, insbesondere aus Wind- und Sonnenenergie, fällt fluktuierend, je nach Wetterlage an, sodass Überschusskapazitäten sich mit Zeiten abwechseln, zu denen keine bzw. nicht ausreichend Energie erzeugt werden kann.

Das Wasser wird mit überschüssigem Strom aus Stromspitzen, der entsprechend preiswert ist, hoch gepumpt. Wenn kein überschüssiger Strom vorhanden ist, schalten die Pumpen ab und die Leitungen laufen automatisch leer. Die Leitungen und Verteilerköpfe sind vorteilhaft isoliert und/oder mit einer elektrischen Stützheizung versehen.

Die Leitungen können vorteilhaft auch unterirdisch verlegt sein.

Möglich ist auch ein Hintereinanderschalten von Kraftwerken.

### Regelung der Wasserverteilung:

Das Wasser wird durch Pumpen, die bislang bereits in der Kraftwerkstechnik zur Stromerzeugung genutzt werden, zum Beispiel Pumpturbinen der Fa. Sulzer Hydro oder der Fa. Voith über Rohrleitungen aus dem Speicherbecken in höhere Regionen gepumpt. Die Rohrleitungen hierzu werden oberirdisch oder unterirdisch verlegt. Die Wasserverteilung erfolgt dann durch entsprechende Verteilersysteme (vielverzweigtes Rohrsystem mit Löchern, Sprühsystemen usw.), die wiederum durch Sensoren, die lokal installiert oder berührungsfrei sind, geregelt werden. Lokal installierte Sensoren können zum Beispiel Temperatur-, Druckkraft-, Schichtdicke- und Leitfähigkeitssensoren sein. Unter den berührungsfreien Sensorikmethoden sind insbesondere GPS-Methoden sowie Infrarotmessmethoden zu verstehen. Die Regelungsmethode funktioniert so, dass zum Beispiel das Wasser durch ein geregeltes System aus verzweigten perforierten Rohren so lange auf den natürlichen Speicher gefördert wird, bis der nächstliegende Sensor anzeigt, dass das Wasser an dieser Stelle nicht mehr ausreichend fest ist, dann wird auf einen anderen Zweig umgeschaltet. Ist das Wasser am Sensor vollständig zu Eis durchgefroren, dann wird wieder frisches Wasser aufgegben. Die lokal installierten Sensoren sind vor allem bei zusätzlichem Schneefall funktionssicher.

Die Verteilung des Wassers kann auch mit Hilfe von berührungsfreier Technologie, insbesondere der Satellitentechnologie (GPS, Höhenmeter, usw.), Infrarottechnologie (Wärmebildkamera) und Videoüberwachung gesteuert und geregelt werden. Möglich ist auch eine optische Messtechnik mit Nachtsichtmöglichkeiten bzw. Lasermessungen.

Die elektrische Energie kann auch aus konventionellen Kraftwerken, Kohlekraftwerken und Kernkraftwerken stammen, vor allem wenn diese zur Abdeckung von Grundlasten eingesetzt werden und diese Grundlast nicht abgerufen wird.

Durch Zulieferung von Wasser aus anderen Quellen(Seen, Flüsse, Abflüsse aus kleineren Kraftwerken) kann die Zykluszeit, d.h. die Zeit, in der der gesamte Speicher (Eisschicht) einmal aufgebaut und wieder abgeschmolzen wird, wesentlich verkürzt und somit die Wirtschaftlichkeit verbessert werden.

Im Herbst und Frühjahr gibt es häufig mehr Niederschläge als im Winter. Da es im Herbst /Frühjahr in den entsprechenden Regionen bereits Minusgrade gibt und vor allem, da in dieser Zeit, wegen des längeren Tageslichtes und der noch nicht begonnenen bzw. bereits beendeten Heizperiode mehr überschüssiger Strom zur Verfügung steht, ist es besonders vorteilhaft, diesen auszunutzen, um Wasser hochzupumpen. Dagegen steht Im Winter in der Regel weniger Überschussstrom und auch weniger Wasser zum Hochpumpen zur Verfügung.

Unter Zykluszeit ist die Dauer zu verstehen, die benötigt wird, um den natürlichen Speicher vollständig mit Eis zu füllen und wieder abzuschmelzen. Die Zykluszeit sollte geringer als 180 Tage, bevorzugt kleiner als 150 Tage, besonders bevorzugt kleiner als 120 Tage, insbesondere kleiner als 90 Tage betragen, damit der natürliche Speicher innerhalb einer Wintersaison bzw. innerhalb einer Frühlings- oder Herbstsaison zu füllen. Natürlich kann der Speicher bei entsprechenden Umgebungsbedingungen auch im Winter bzw. Frühling oder Herbst teilweise abgeschmolzen werden und so ein Teil des Speichers nicht saisonal sondern im Tag-Nacht-Wechsel bzw. im Wochenwechsel betrieben werden.

Das erfindungsgemäße Verfahren weist die großen Vorteile auf, dass es bekannte und bereits installierte Systeme nutzt, um elektrische Energie aus Überschusskapazitäten von insbesondere erneuerbaren Energiequellen zu speichern. Dies bedeutet geringe Investitionskosten und ein niedriges Investitionsrisiko.

Darüber hinaus bietet das erfindungsgemäße Verfahren eine einfache, kostengünstige und ökologisch vorteilhafte Lösung, um die Vorlagebecken von Pumpspeicherkraftwerken aufzufüllen, wofür bislang andere Energiequellen (Kernkraft, Kohle etc.) eingesetzt wurden.

Die Erfindung wird nachfolgend durch Ausführungsbeispiele und eine Zeichnung näher erläutert.

In der Zeichnung bezeichnen gleiche Bezugszeichen jeweils gleiche oder entsprechende Merkmale.

In der Zeichnung zeigen im Einzelnen:
Figur 1 eine schematische Darstellung einer bevorzugten Ausführungsform für das erfindungsgemäße Verfahren,
Figur 2 eine schematische Darstellung einer weiteren bevorzugten Ausführungsform für das erfindungsgemäße Verfahren.

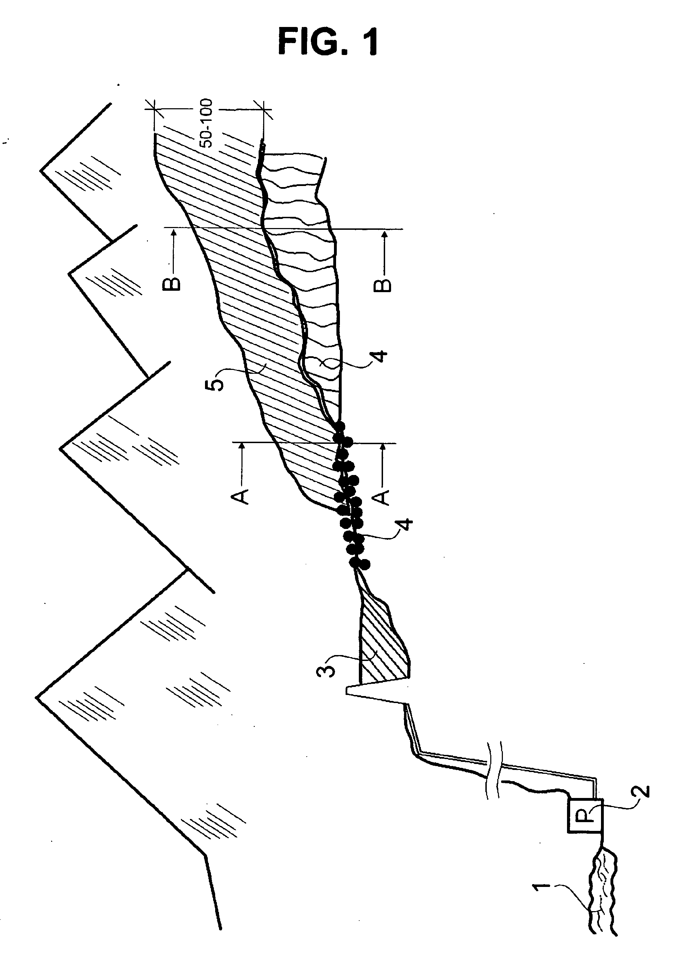

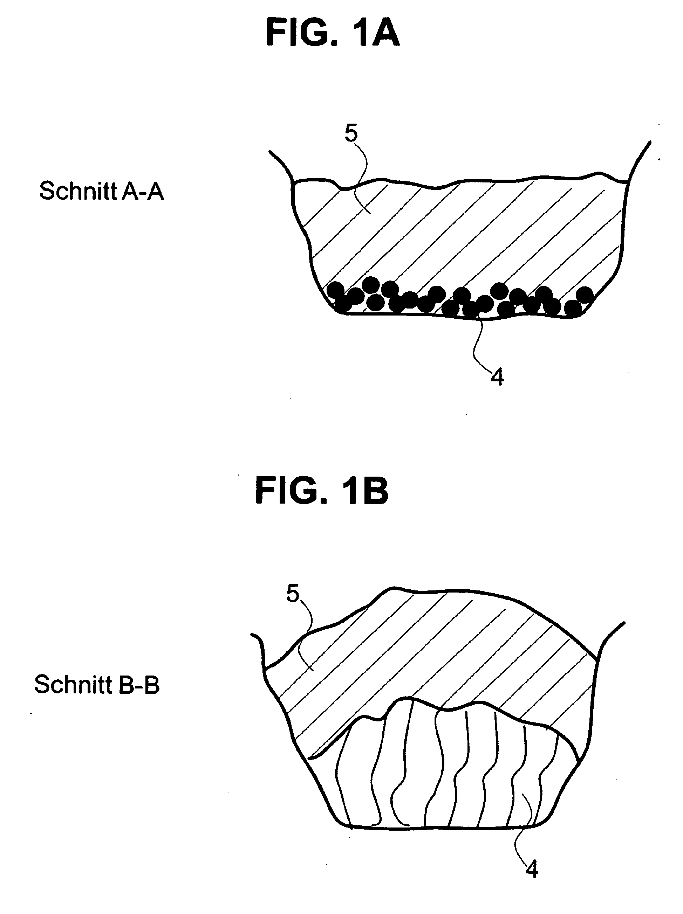

In der in Figur 1 dargestellten bevorzugten Ausführungsform wird Wasser aus einem Vorlagebecken 1 durch ein Kraftwerk/Pumphaus 2 in ein höher gelegenes Speicherbecken 3 gepumpt. Unter Nutzung von Stromspitzen wird Wasser aus dem Speicherbecken 3 auf einen höher gelegenen natürlichen Speicher 4, vorliegend ein Gletscher sowie in ein sich daran anschließendes Gletscherbett gepumpt. Das Wasser wird als Eisschicht 5 hierauf abgelagert.

Figur 1A zeigt eine Querschnittsdarstellung im Bereich A-A, mit auf dem Gletscherbett 4 gebildeter Eisschicht 5.

Figur 1B zeigt eine Querschnittsdarstellung im Bereich B-B, mit auf dem Gletscher 4 gebildeter Eisschicht 5.

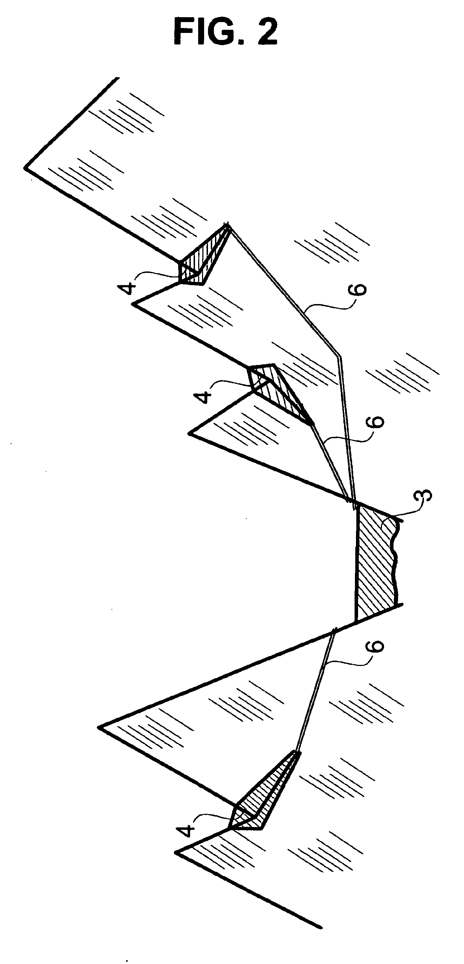

Die in Figur 2 dargestellte bevorzugte Ausführungsform zeigt natürliche Speicher 4 in Form von Geröllfeldern in Hochtälern oberhalb eines Speicherbeckens 3, mit Verbindungskanälen 6 für das Schmelzwasser aus den Geröllfeldern 4 zum Speicherbecken 3.

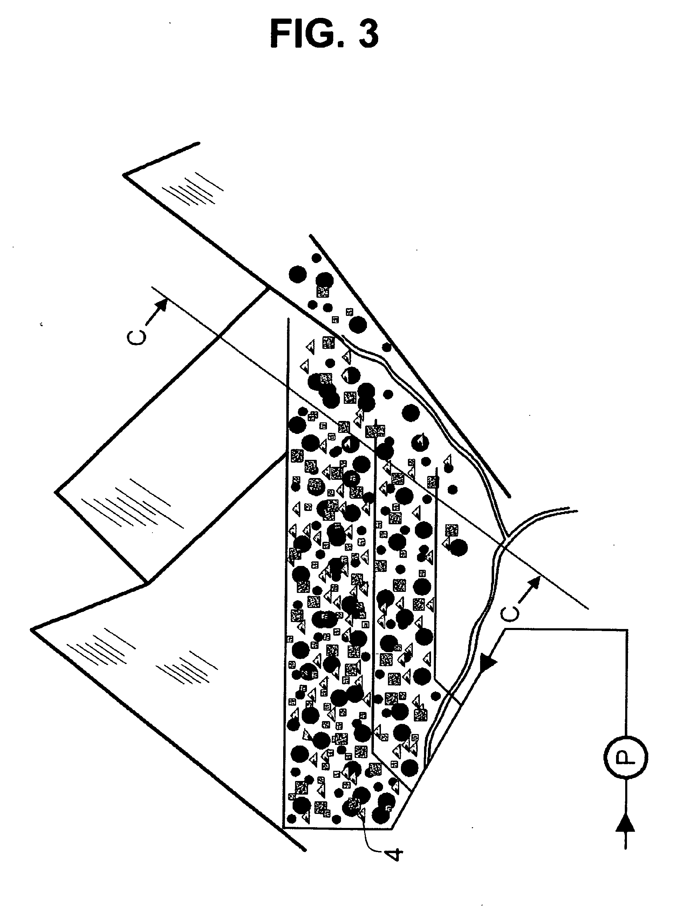

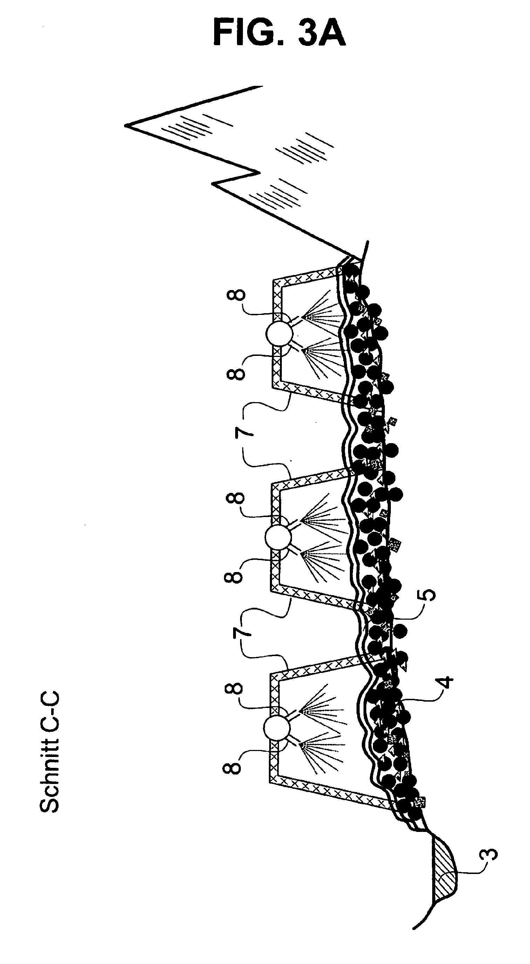

Figur 3 zeigt schematisch ein Geröllfeld, das zur Speicherung von Wasser genutzt wird. Über die Pumpe P wird das Wasser aus einem nicht dargestellten Speicherbecken in die Region des höhergelegenen Geröllfeldes 4 durch eine Rohrleitung hochgepumpt und über Leitungssysteme mit Verteileinrichtungen in mehreren Ebenen über die nutzbare Breite des Geröllfeldes verteilt und somit bei entsprechenden Temperaturen eine Eisschicht 5 erzeugt. Schmilzt das Eis, wird das Schmelzwasser in den natürlichen Wasserwegen gesammelt und zurück zum Speicherbecken geleitet, oder falls eine Eisschicht auf einer anderen Bergseite gebildet wurde, mit den entsprechenden Zuleitungen (Verbindungsstollen) zurück zum Speicherbecken geführt.

Figur 3A zeigt im Schnitt C-C eine Ausführungsvariante für die Wasserverteilung. Das Wasserverteilsystem hängt an einer Metallkonstruktion 7 quer über der ganzen Breite des nutzbaren Geröllfeldes 4. Das Wasser wird mittels Düsen 8 oder direkt aus den Bohrungen / Löchern anfänglich auf das Geröllfeld 4 und später auf die aufwachsende Eischicht 5 aufgebracht.

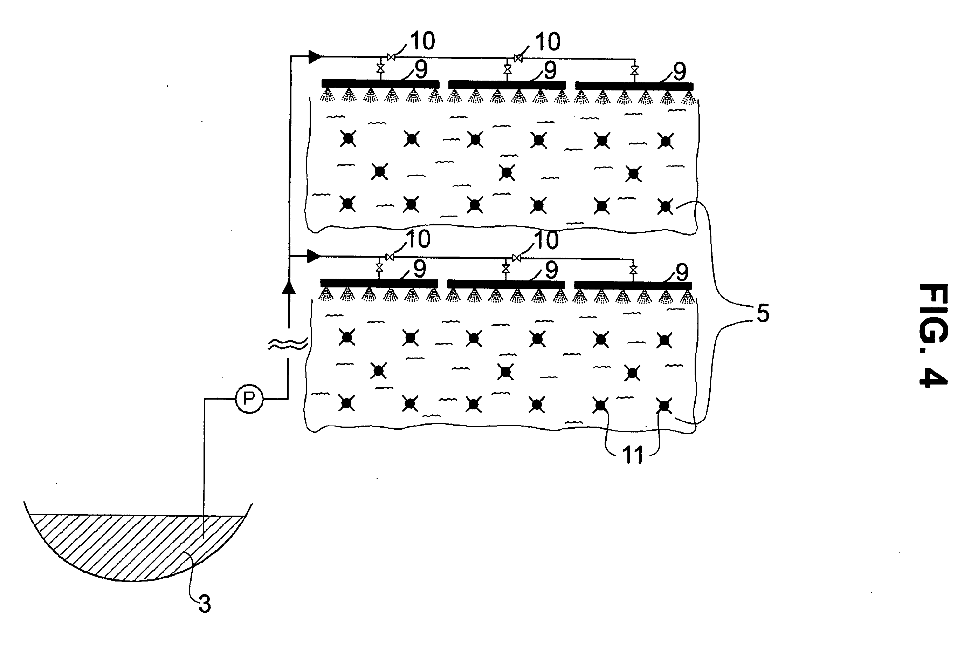

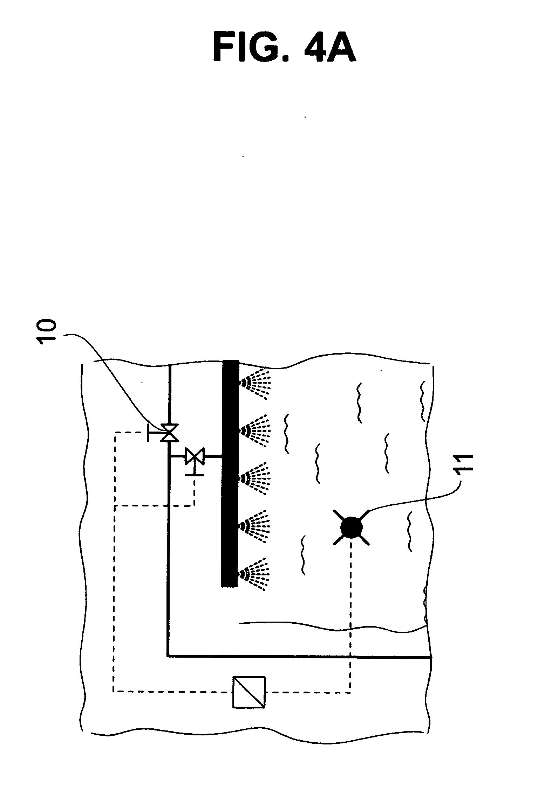

Figur 4 zeigt eine Ausführungsvariante des Verteilersystems. Die Verteiler 9 sind über Schieber 10 einzeln zu- und abstellbar. In den Bereichen, in denen die Eisschicht 5 aufgebaut wird, sind Sensoren 11 eingebaut, die den Zustand des Eises überwachen.

Figur. 4A zeigt eine besondere Ausführungsvariante, bei der die Schieber 10 direkt über die Sensoren 11 geregelt werden. Merkt der Sensor 11, dass z.B. das Wasser an der entsprechenden Stelle noch nicht vollständig gefroren ist, dann schließt dieser den entsprechenden Verteilerarm und schaltet auf einen anderen um.

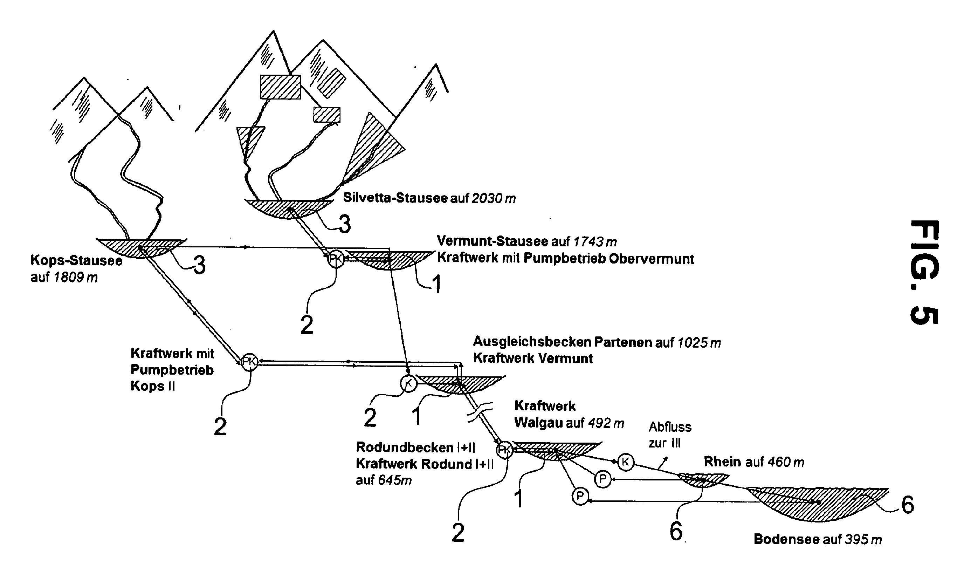

Figur. 5 zeigt schematisch eine besonders bevorzugte Ausführungsvariante:
schematisch dargestellt sind Speicherbecken 3 (Silvretta-Stausee und Kops-Stausee), Vorlagebecken 1 (Vermunt-Stausee, Ausgleichsbecken Partenen und Rodundbecken), Kraftwerke 2 mit Pumpbetrieb sowie der Rhein als fließendes Gewässer 6 und der Bodensee als stehendes Gewässer 6.

### Ausführungsbeispiel 1

Anhand der Staustufen und Kraftwerke der Vorarlberger Illwerke AG kann das Potenzial der Erfindung beispielhaft aufgezeigt werden. Im Ausführungsbeispiel wird ein Ausschnitt aus dem Staustufen- und Kraftwerksverbund der Illwerke AG beschrieben. Dem Ausführungsbeispiel liegt die Idee zu Grund, in der Silvrettaregion Eis in Form von potentieller Energie zu speichern. Das Einzugsgebiet der Silvrettaregion liegt auf einer Höhe von 1800 - 3300 m und ist ca. 45 km² groß. Davon sind ca. 10 km² vergletschert. Die Gletscher sind stark zurückgegangen, so dass zum Beispiel die III, die am Piz Buin entspringt, durch das Ochsental (ein ca. 5 km langes Hochtal) direkt in den Silvretta-Stausee mündet. Die jetzt noch vorhandenen Gletscher der Silvrettaregion (z.B. Ochsentaler- , Klostertaler- , Schattenspitz- , Schneeglocken-, Vermunt- und Rauher Kopfgletscher usw.) haben wirtschaftlich nutzbare Abmessungen von jeweils ca. 0,5 - 1,0 km². Bei Ausnutzung von ca. 1/3 der gesamt vergletscherten Fläche (ca. 3,33 km²) und einer aufgebrachten Eisdicke von 50 m lassen sich ca. 166 Mio. m³ Wasser in Form von Eis speichern. Das nutzbare hintere Ochsental selbst ist ca. 4 km lang und hat eine mittlere Breite von ca. 500 m. Bei Aufbringung einer mittleren Eisdicke von 50 m ergibt sich ein potentielles Speichervolumen von 50 Mio. m³.
Hieraus ergibt sich ein vereinfacht abgeschätztes Potenzial allein im Einzugsbereich des Silvretta-Stausees von 216 Mio. m³ (166 + 50 Mio. m³) Eisspeicherkapazität. Das Schmelzwasser dieses Eises gelangt zum größten Teil auf natürlichen Wasserwegen oder in schon bestehenden Einfriedungen und Leitungssystemen in die Speicher-bzw. Vorlagebecken(Silvretta- oder Vermunt-Stausee). Das gesammelte Wasser kann dann aus den Speicher-bzw. Vorlagebecken über mehrere Kraftwerks- und Stauseestufen zur elektrischen Stromerzeugung genutzt werden. Im betrachteten Bereich der Illwerke AG steht eine Höhendifferenz von insgesamt ca. 1538 m zur Verfügung. Hierzu ergibt sich bei einem Volumenstrom von 30 m³/s Wasser durch die Turbinen eine Leistung von 453 MW. Würde die komplette Eisspeicherkapazität von 216 Mio. m³ in elektrische Energie umgewandelt werden, dann könnte diese Leistung von 453 MW ca. 2000 h aufrechterhalten. Das entspricht ca. 900 Mio. KWh Strom bei einem einmaligen Zyklus Aufbau/Abschmelzen.
Da die Niederschläge bzw. das eigentliche natürliche Wasseraufkommen für einen jährlichen Aufbau der Eismassen nicht ausreicht um die Eisspeicherkapazität vollständig zu nutzen, ist es zweckmäßig, das notwendige Wasser aus anderen Regionen, zum Beispiel vom Rhein oder Bodensee herbeizuschaffen. Das Wasser müsste dazu durch ein neu zu installierendes Rohrleitungssystem von ca. 400 m ü.NN / 450 m ü. NN (Bodensee /Rhein) auf 645 m ü. NN Höhe in die Rodundbecken I bis III gepumpt werden. Von dort ist die Infrastruktur bereits größtenteils vorhanden um das Wasser bis in das Vorlagebecken Vermunt-Stausee in 1743 m ü. NN bzw. in das Speicherbecken Silvretta-Stausee in 2030 m ü. NN. zu pumpen.

### Ausführungsbeispiel 2

Am Beispiel des Kraftwerkes Kaprun, das zum Verbund Hydro Power AG gehört wird ebenfalls das Potenzial der Erfindung aufgezeigt.
Das Speicherbecken auf dem Moserboden (Nutzinhalt 84,9 Mio. m³) liegt auf 2005 m ü. NN und wird über den Möllüberleitungsstollen vom weiteren Speicherbecken Margaritze (2000 m ü. NN mit Nutzinhalt 3,3 Mio. m³) und verschiedenen Bächen versorgt. Durch den Aufbau des Pasterzegletschers am Großglockner könnte ein zusätzlicher Eisspeicher mit einer mittleren Breite von 750 m, einer Länge von 3500 m und 75 m Dicke aufgebaut werden. Der Eisspeicher hätte eine Kapazität von ca. 197 Mio. m³ Eis. Das Schmelzwasser dieses Eisspeichers wird im Speicherbecken Moserboden gesammelt, das auch als Sammelbecken für das Schmelzwasser dient. Über mehrere hintereinandergeschaltete Stausee/Kraftwerksanlagen steht für die Stromerzeugung eine Höhendifferenz von 1157 m (2004 m Moserboden - 847 m Kraftwerk Kaprun) zur Verfügung. Bei einem Volumenstrom von 30 m³/s ergibt sich eine Leistung von 340 MW bei einer Leistungsdauer von insgesamt 1824 h. Das entspricht 620 Mio. KWh Strom bei einem einmaligen Zyklus eines vollständigen Aufbaus/Abschmelzens. Die Wirtschaftlichkeit wird durch Verkürzung der Zykluszeit erhöht.

## Patentansprüche

1. Verfahren zur Speicherung von elektrischer Energie in einem natürlichen Speicher, wobei
1. die elektrische Energie eingesetzt wird, um Wasser aus einem Speicherbecken (3) eines Wasserkraftwerks oder Pumpspeicherwerks (2) auf einen höher gelegenen natürlichen Speicher (4), ausgewählt aus Gletscherfeldern, Gletscherbetten abgetauter Gletscher, Geröllfeldern, Hochtälern, Nordhängen, Wäldern, Wiesen und Hochmooren, zu pumpen, der auf einer Höhe liegt, in der
2. eine Oberflächentemperatur des natürlichen Speichers (4) vorliegt, bei der das Wasser zu einer Eisschicht (5) gefriert, wobei die elektrische Energie in Form von potentieller Energie der Eisschicht (5) gespeichert wird und wobei
3. zu einem späteren Zeitpunkt unter geeigneten Umgebungsbedingungen die Eisschicht (5) teilweise oder vollständig schmilzt, wobei Wasser entsteht, das
4. zurück in ein Speicherbecken (3) fließt, und wobei
5. das Wasser aus dem Speicherbecken (3) bei Bedarf über eine oder mehrere Turbinen eines Wasserkraftwerks oder Pumpspeicherwerks (2) geleitet wird, wobei die potentielle Energie erneut in elektrische Energie umgewandelt wird,
**dadurch gekennzeichnet, dass** die Regelung der Wasserverteilung über einen oder mehrere Verteiler (9) erfolgt, die einzeln mittels Schiebern (10) zubeziehungsweise abstellbar sind, und wobei die Schieber bevorzugt mit einer Regeleinheit verbunden sind, die dieselben in Abhängigkeit von einem Signal steuert, womit Sensoren (11), die in der Eisschicht (5) angeordnet sind, den Grad der Durchfrierung derselben registrieren und/oder dass die Verteilung des Wassers mit Hilfe von berührungsfreier Technologie, insbesondere der Satellitentechnologie, Infrarottechnologie und Videoüberwachung gesteuert und geregelt wird.

2. Verfahren nach Anspruch 1, **dadurch gekennzeichnet, dass** die elektrische Energie zusätzlich eingesetzt wird, um Wasser aus einem Vorlagebecken (1) in ein höher gelegenes Vorlagebecken (1) zu pumpen.

3. Verfahren nach Anspruch 1 oder 2, **dadurch gekennzeichnet, dass** die elektrische Energie zusätzlich eingesetzt wird, um Wasser aus einem Vorlagebecken (1) in ein höher gelegenes Speicherbecken (3) zu pumpen.

4. Verfahren nach einem der Ansprüche 1 bis 3, **dadurch gekennzeichnet, dass** die elektrische Energie zusätzlich eingesetzt wird, um Wasser aus einem Vorlagebecken (1) auf einen höher gelegenen natürlichen Speicher (4) zu pumpen.

5. Verfahren nach einem der Ansprüche 1 bis 4, **dadurch gekennzeichnet, dass** die elektrische Energie zusätzlich eingesetzt wird, um Wasser aus einem stehenden oder fließenden natürlichen Gewässer (6) in ein höher gelegenes Vorlagebecken (1), in ein höher gelegenes Speicherbecken (3) oder auf einen höher gelegenen natürlichen Speicher (4) zu pumpen.

6. Verfahren nach einem der Ansprüche 1 bis 5, **dadurch gekennzeichnet, dass** die elektrische Energie aus Überschusskapazitäten von erneuerbaren Energiequellen stammt.

7. Verfahren nach Anspruch 1 oder 2, **dadurch gekennzeichnet, dass** als natürlicher Speicher (4) ein Gletscherfeld, ein Gletscherbett eines abgetauten Gletschers, ein Geröllfeld, ein Hochtal oder ein Nordhang genutzt wird.

8. Verfahren nach einem der Ansprüche 1 bis 7, **dadurch gekennzeichnet, dass** die Verteiler (9) an einer bevorzugt mobilen Metallkonstruktion oberhalb des natürlichen Speichers (4) angeordnet sind.

9. Verfahren nach Anspruch 8, **dadurch gekennzeichnet, dass** sich die mobilen Metallkonstruktion über die gesamte Breite des natürlichen Speichers (4) erstreckt.

10. Verfahren nach einem der Ansprüche 1 bis 9, **dadurch gekennzeichnet, dass** das Abschmelzen der Eisschicht (5) mittels geeigneter Abdeckungen, insbesondere verstellbare Lamellen oder Folien, die bevorzugt mit licht- und wärmereflektierenden oder licht- und wärmeabsorbierenden Materialien beschichtet sind, steuerbar ist.

11. Verfahren nach einem der Ansprüche 1 bis 10, **dadurch gekennzeichnet, dass** in die Eisschicht (5) Zusatzstoffe eingebracht sind, die das Abschmelzen verzögern oder verhindern, bevorzugt natürliche Stoffe, die die Umwelt nicht belasten, insbesondere natürliche Sande oder feiner Staub.

## Claims

1. A process for storing electric energy in a natural storage facility wherein
1. the electric energy is used to pump water from a storage basin (3) of a water power plant or a pumped power plant (2) to a higher situated natural storage facility (4) selected from a glacier field, a glacier bed, a boulder field, a high valley, a north slope, woods, meadows und highmoors, which is situated at a height at which
2. a superficial temperature of the natural storage facility (4) is present at which the water is freezing to an ice layer (5), whereby the electric energy is stored as potential energy and whereby
3. at a later point of time under appropriate environmental conditions the ice layer (5) completely or partially melts, whereby water results, which
4. flows back in a storage basin (3) and whereby
5. the water from the storage basin (3) is conducted as needed over one or more turbines of a water power plant or a pumped power plant (2), whereby the potential energy is transformed again into electric energy,
**characterized in that** the control of the water distribution is effected via one or more distributors (9) which can individually be served or switched off by use of gate valves (10) and whereby the gate valves are preferably connected to a control unit, which controls the same in dependency with a signal, with which sensors (11) arranged in the ice layer (5) register the degree of freezing throughout the same and/or that the distribution of the water is operated and controlled by use of contact free technology, especially satellite technology, infrared technology and video supervision.

2. The process according to claim 1, **characterized in that** the electric energy is used in addition to pump water from a reservoir (1) into a higher situated reservoir (1).

3. The process according to claim 1 or 2, **characterized in that** the electric energy is used in addition to pump water from a reservoir (1) into a higher situated storage basin (3).

4. The process according to one of the claims 1 to 3, **characterized in that** the electric energy is used in addition to pump water from a reservoir (1) into a higher situated storage facility (4).

5. The process according to one of the claims 1 to 4, **characterized in that** the electric energy is used in addition to pump water from a standing or flowing natural water(6) into a higher situated reservoir (1), a higher situated storage basin (3), or a a higher situated natural storage facility (4).

6. The process according to one of the claims 1 to 5, **characterized in that** the electric energy results from excess capacities of renewable energy sources.

7. The process according to claims 1 or 2, **characterized in that** as natural storage facility (4) a glacier field, a glacier bed of a melted glacier, a boulder field, a high valley or a north slope is used.

8. The process according to one of the claims 1 to 7, **characterized in that** the distributors (9) are placed on a preferably mobile metal construction above the natural storage facility (4).

9. The process according to claims 8, **characterized in that** the mobile metal construction is extending over the whole width of the the natural storage facility (4).

10. The process according to one of the claims 1 to 9, **characterized in that** the melting of the ice layer (5) is controllable by means of appropriate coverages, especially adjustable lamellae or foils, which are preferably coated with light and heat reflecting or with light and heat absorbing materials.

11. The process according to one of the claims 1 to 10, **characterized in that** into the ice layer there are inserted additives which delay or prevent the melting, preferably natural substances, which do not burden the environment, especially natural sands or fine dust.

## Revendications

1. Procédé de stockage de l'énergie électrique dans un Installation naturel d'entreposage dans lequel :
1. l'énergie électrique est utilisée pour pomper de l'eau d'un bassin de stockage (3) d'une centrale hydroélectrique ou d'une centrale d'accumulation par pompage (2) vers un Installation naturel d'entreposage (4) situé plus haut, choisi parmi un domaine glacier, le lit d'un glacier, un domaine rocheux, une grande vallée, un versant nord, des bois, des prés et des marécages, qui est situé à une hauteur à laquelle
2. la température présente à la surface d'Installation naturel d'entreposage (4) est celle à laquelle l'eau se gèle en une couche de glace (5), dans laquelle l'énergie électrique est stockée comme énergie potentielle et à laquelle
3. à un instant ultérieur et par des conditions environnementales appropriées, la couche de glace (5) fond partiellement ou complétement, se transformant ainsi en eau, qui
4. s'écoule de nouveau vers le bassin de stockage (3) et où
5. l'eau du bassin de stockage (3) est dirigée selon le besoin vers une ou plusieurs turbines d'une centrale hydroélectrique ou d'une centrale d'accumulation par pompage (2), où l'énergie potentielle sera transformée de nouveau en énergie électrique, **caractérisée par** le contrôle de la distribution de l'eau effectué par un ou plusieurs distributeurs (9) qui peuvent être individuellement commandés ou fermés par des vannes (10), de préférence connectés à une centrale de commande, qui les contrôle en fonction d'un signal, dont les capteurs (11) positionnés dans la couche de glace mesurent son niveau de gel et/ou que la distribution de l'eau est effective et contrôlée par une technologie sans contact, comme une technologie satellite, technologie infrarouge et surveillance vidéo.

2. Procédé défini dans l'article 1, **caractérisé par** l'utilisation d'énergie électrique supplémentaire pomper l'eau depuis un réservoir (1) jusqu'à un autre situé plus haut.

3. Procédé défini dans l'article 1 ou 2, **caractérisé par** l'utilisation d'énergie électrique supplémentaire pomper l'eau depuis un réservoir (1) jusqu'à un bassin de stockage (3) situé plus haut.

4. Procédé défini dans les articles 1 à 3, **caractérisé par** l'utilisation d'énergie électrique supplémentaire pomper l'eau depuis un réservoir (1) jusqu'à l'Installation naturel d'entreposage (4) situé plus haut.

5. Procédé défini dans un des articles 1 à 4 **caractérisé par** l'utilisation d'énergie électrique supplémentaire pomper l'eau depuis de l'eau naturellement stagnante ou fluviale (6) jusqu'à un réservoir (1) situé plus haut, un bassin de stockage (3) situé plus haut ou un Installation naturel d'entreposage (4) situé plus haut.

6. Procédé défini dans un des articles 1 à 5, **caractérisé par** l'énergie électrique résultant de l'excès de capacité des sources d'énergie renouvelable.

7. Procédé défini dans les articles 1 ou 2, **caractérisé par** l'utilisation d'un domaine glacier, le lit d'un glacier en fonte, un domaine rocheux, une grande vallée ou un versant nord comme Installation naturel d'entreposage (4).

8. Procédé défini dans un des articles 1 à 7, **caractérisé par** la position des distributeurs (9) de préférence sur une construction métallique mobile au-dessus du l'installation naturel d'entreposage turel (4).

9. Procédé défini dans l'article 8, **caractérisé par** sa construction métallique mobile qui s'étend sur toute la largeur du l' Installation naturel d'entreposage (4).

10. Procédé défini dans un des articles 1 à 9, **caractérisé par** la fonte de la couche de glace (5) contrôlable par son recouvrement réglable par lames ou feuilles métalliques, couvertes de préférence par des matériaux réfléchissants ou absorbants la lumière et la chaleur.

11. Procédé défini dans un des articles 1 à 10, **caractérisé par** l'insertion d'additifs dans la couche de glace qui retardent ou empêchent la fonte, de préférence des substances naturelles, qui n'affectent pas l'environnement, comme des sables naturels ou de la poussière fine.
